# EUROPÄISCHE PATENTSCHRIFT

(11) **EP 1 481 864 B1**
(45) Veröffentlichungstag und Bekanntmachung des Hinweises auf die Patenterteilung: **12.10.2005**
(21) Anmeldenummer: 04102287.2
(22) Anmeldetag: 25.05.2004
(51) Int. Cl.: B60T 8/40, B60T 8/48, B60T 8/26

(54) **Verfahren und Vorrichtung zum Abbremsen eines Kraftfahrzeugs mittels eines Fahrerassistenzsystems**
Method and device for braking a motor vehicle by means of a driver assistance system
Méthode et dispositif pour freiner un véhicule automobile par un système d'assistance pour conducteur

(30) Priorität: 28.05.2003 DE 10324243
(43) Veröffentlichungstag der Anmeldung: 01.12.2004
(73) Patentinhaber: Bayerische Motoren Werke Aktiengesellschaft, 80809 München (DE)
(72) Erfinder: Unterforsthuber, Jakob, 82216, Maisach (DE)

(56) Entgegenhaltungen:
- WO-A-96/11129
- WO-A-96/14228
- DE-A- 3 345 694
- DE-A- 4 106 336
- DE-A- 4 128 091
- DE-C- 4 232 311

## Beschreibung

Die Erfindung betrifft gemäß dem Oberbegriff des Anspruchs 1 ein Verfahren zum Abbremsen eines Kraftfahrzeugs mittels eines Fahrerassistenzsystems, wobei das Fahrzeug mit einer hydraulischen Zweikreis-Bremsanlage ausgestattet ist, die einen einkreisigen der Fahrzeug-Vorderachse zugeordneten Hauptbremszylinder mit Bremsfluid-Reservoir aufweist und mit einer Blockierschutzeinrichtung, die eine Bremsdruckmodulationsventilanordnung und eine der Fahrzeug-Vorderachse zugeordnete Rückförderpumpe besitzt, versehen ist, und die eine automatische Bremseinrichtung enthält, die im Zusammenwirken mit der Blockierschutzeinrichtung und deren Rückförderpumpe die Fahrzeugbewegung fahrerunabhängig und radindividuell abbremsen und/oder stabilisieren kann, und die weiterhin mit einer elektromotorisch angetriebenen Hilfspumpe zum Fördern von Bremsfluid zu Einlassventilen der Radbremszylinder der Vorderachse ausgerüstet ist.

Ferner betrifft die Erfindung eine hydraulische Zweikreis-Fahrzeugbremsanlage mit einem einkreisigen der Fahrzeug-Vorderachse zugeordneten Hauptbremszylinder mit Bremsfluid-Reservoir, mit einer Blockierschutzeinrichtung, die eine Bremsdruckmodulationsventilanordnung und eine der Fahrzeug-Vorderachse zugeordnete Rückförderpumpe besitzt, und mit einer automatischen Bremseinrichtung, die im Zusammenwirken mit der Blockierschutzeinrichtung und deren Rückförderpumpe die Fahrzeugbewegung fahrerunabhängig und radindividuell abbremsen und/oder stabilisieren kann, sowie mit einer elektromotorisch angetriebenen Hilfspumpe zum Fördern von Bremsfluid zu Einlassventilen der Radbremszylinder der Vorderachse, insbesondere zur Durchführung des Verfahrens nach Anspruch 1.

Zum technischen Umfeld wird neben der DE 33 45 694 C2 insbesondere auf die DE 42 32 311 C1 verwiesen, darüber hinaus auf die heute in Serie bspw. bei Personenkraftwagen eingesetzten modernen Bremsanlagen. Diese modernen Bremsanlagen für Kraftfahrzeuge enthalten eine dem Fachmann auch unter der Bezeichnung ESP (oder auch DSC) bekannte Fahrdynamikregelung, die mit den für eine ebenfalls allgemein bekannte Blockierschutzregelung (ABS) bereits vorhandenen Bauelementen arbeitet. Diese Fahrdynamikregelung kann ein Fahrzeug bei Schleudergefahr durch gezielte Bremseneingriffe stabilisieren, wobei der fahrerunabhängige Bremsdruckaufbau von der genannten Rückförderpumpe, die ursprünglich nur für die Blockierschutzregelung vorgesehen war, übernommen wird. Üblicherweise ist dieses System dabei so ausgelegt, dass sowohl die beiden Radbremszylinder der Vorderachse eines zweispurigen Fahrzeugs, als auch dessen beiden Hinterachs-Radbremszylinder von diesem System angesteuert werden.

Ein dem Fachmann ebenfalls bekannter Zwischen-Entwicklungsstand einer hydraulischen Fzg.-Bremsanlage mit Fahrdynamikregelung, der beispielsweise in der eingangs zweitgenannten DE 42 32 311 C1 gezeigt ist, enthielt eine sog. Vorladepumpe, welche die Dynamik des Druckaufbaus bei aktiver Fahrdynamikregelung vor allem bei Tieftemperaturen verbessern sollte. Die Vorladepumpe erzeugte nur einen Druck von maximal 20 bar und war auf ein großes Fördervolumen ausgelegt. Dadurch war sie in der Lage, den Füllbereich der jeweiligen Radbremszylinder schnell mit Bremsfluid zu befüllen. Den weiteren Druckaufbau im Bremsfluid bis hin zum geforderten Regeldruck (in der Größenordnung von 70 bar bis 120 bar) übernahm - ebenso wie in den derzeitigen Bremsanlagen, die ohne Vorladepumpe arbeiten - danach die besagte Rückförderpumpe.

Bekannt sind weiterhin sog. Fahrerassistenzsysteme, bspw. die Fahrgeschwindigkeitsregelung ACC, die einen autonomen, d.h. fahrerunabhängigen Bremseneingriff erfordern. Bekanntermaßen gibt hierbei der Fahrer des Fahrzeugs eine Wunsch-Fahrgeschwindigkeit vor, die das Fahrzeug unter Berücksichtigung des vorausfahrenden Verkehrs selbsttätig einzuhalten versucht. Bei Kolonnenverkehr müssen dann naturgemäß eine Vielzahl von Abbremsungen durchgeführt werden. Dabei sollte das Bremssystem in der Lage sein, selbsttätig eine bestimmte Verzögerung in der geforderten Dynamik und Qualität zu erzeugen, wobei hier an die Qualität wesentlich höhere Anforderungen gestellt werden als bei Eingriffen von Fahrdynamikreglern. Während letztere nämlich nur in Notfällen aktiv sind, erfolgen Bremseneingriffe von Fahrerassistenzsystemen praktisch laufend, weshalb der Fahrer hier deutlich höhere Ansprüche im Hinblick auf eine komfortable Abbremsung stellt als in wenigen Notsituationen. '

Ein autonomer Bremseingriff eines Fahrerassistenzsystems kann gemäß dem bekannten Stand der Technik auf unterschiedliche Weise erfolgen. Zumeist wird die Fahrdynamikregelung bzw. das zugehörige System der Blockierschutzeinrichtung, d.h. ein übliches ESP-Bremssystem, auch zum Aufbau von Bremsdruck für das Fahrerassistenzsystem genutzt, jedoch ist die bereits vorhandene Rückförderpumpe, welcher der Aufbau des Bremsdruckes obliegt, für gänzlich andere Anforderungen als bei einem autonomen Bremseneingriff ausgelegt. Diese Rückförderpumpe kann zwar hohe Drücke erzeugen, verfügt aber nur über eine geringe Dynamik, und besitzt eine schlechte Regelbarkeit im niedrigen Druckbereich. Der Druckaufbau erfolgt unstetig und bei üblicher Verschaltung an der Vorderachse und der Hinterachse des Kraftfahrzeugs in unterschiedlicher Höhe. Vorteilhaft bei diesem Konzept ist die Ansteuerung der Rückförderpumpe durch das die Fahrdynamikregelung übernehmende Steuergerät, so dass hierfür keine zusätzlichen Bauteile erforderlich sind. Diese Lösung kann also relativ kostengünstig umgesetzt werden.

Ein gewünschter dosierbarer autonomer, d.h. fahrerunabhängiger Bremseneingriff kann alternativ auch mittels eines regelbaren Unterdruckverstärkers erzeugt werden, jedoch ist dieser aufwändig und teuer. Er stellt gegenüber dem in millionenfacher Stückzahl produzierten Standard-Bremsgerät eine völlige Neuentwicklung dar. Der höhere Komplexitätsgrad wirkt sich nachteilig auf die Robustheit und die Zuverlässigkeit des Bremsgerätes aus. Ein Vorteil dieser Lösung ist die Eignung für sämtliche Anwendungsfälle eines autonomen Bremseneingriffs, so bspw. auch für die hohen Dynamik- und Verzögerungsanforderungen einer automatischen Geschwindigkeitsregelung mit Stop&Go-Funktion oder einer automatischen Unfallvermeidung.

Eine dritte Möglichkeit für einen autonomen Bremseneingriff eines Fahrerassistenzsystems stellen die sog. Brake-by-Wire-Systeme dar, von denen bisher nur das elektrohydraulische Prinzip in geringen Stückzahlen produziert wird. Ein solches sog. EHB-System ist insbesondere dann, wenn die gesamte Bremsanlage des Fahrzeugs mit diesem Prinzip arbeiten soll, extrem aufwändig, komplex und ungünstig hinsichtlich des erforderlichen Bauraumes und deutlich schwerer als die anderen genannten Fzg.-Bremsanlagen. Einer der größten Nachteile eines solchen Systems ist jedoch in der Abhängigkeit von der elektrischen Energieversorgung zu sehen. Bei Ausfall der Stromversorgung oder des Steuergeräts fallen nicht nur die autonomen Bremseneingriffe und die Blockierschutzeinrichtung sowie ggf. ebenfalls vorgesehene Schlupfregelsysteme aus, sondern die gesamte Bremskraftverstärkung. Diesbezüglich ist eine mögliche Abhilfemaßnahme bekannt, und zwar indem ein EHB-System lediglich für die Hinterachse des Fahrzeugs vorgesehen wird, während die Vorderachs-Bremsanlage mit einem üblichen Hauptbremszylinder mit Bremskraftverstärker arbeitet (vgl. die eingangs erstgenannte DE 33 45 694 C2). Der Aufwand einer solchen Lösung erscheint jedoch für die bisherigen üblichen Anwendungsfälle zumindest für Personenkraftwagen unvertretbar hoch.

Hiermit soll nun eine hydraulische Zweikreis-Fahrzeugbremsanlage mit einem einkreisigen der Fahrzeug-Vorderachse zugeordneten Hauptbremszylinder mit Bremsfluid-Reservoir, mit einer Blockierschutzeinrichtung, die eine Bremsdruckmodulationsventilanordnung und eine der Fahrzeug-Vorderachse zugeordneten Rückförderpumpe besitzt, und mit einer automatischen Bremseinrichtung, die im Zusammenwirken mit der Blockierschutzeinrichtung und deren Rückförderpumpe die Fahrzeugbewegung fahrerunabhängig und radindividuell abbremsen und/oder stabilisieren kann, sowie mit einer elektromotorisch angetriebenen Hilfspumpe zum Fördern von Bremsfluid zu Einlassventilen der Radbremszylinder der Vorderachse aufgezeigt werden, mit welcher autonome Bremseneingriffe eines Fahrerassistenzsystems mit ausreichender Dynamik (insbesondere auch für eine Abbremsung bis zum Stillstand des Fahrzeugs) unter Gewährleistung einer hohen Qualität (insbesondere was den Bremsdruckaufbau betrifft) durchgeführt werden können. In anderen Worten ausgedrückt soll ein Verfahren aufgezeigt werden, mit dem autonome Bremseneingriffe eines Fahrerassistenzsystems mit ausreichender Dynamik (insbesondere auch für eine Abbremsung bis zum Stillstand des Fahrzeugs) unter Gewährleistung einer hohen Qualität (insbesondere was den Bremsdruckaufbau betrifft) durchgeführt werden können ( = Aufgabe der vorliegenden Erfindung).

Bezüglich des Verfahrens nach dem Oberbegriff des Anspruchs 1 ist die Lösung dieser Aufgabe dadurch gekennzeichnet, dass für fahrerunabhängige Bremseingriffe durch ein Fahrerassistenzsystem zunächst ein der Fahrzeug-Hinterachse zugeordnetes elektrohydraulisches Bremssystem, das aus einer geeigneten, aus einem Bremsfluid-Reservoir gespeisten Pumpe und den Radbremszylindem zugeordneten Einlassventilen und Auslassventilen besteht, aktiviert wird, und dass für stärkere Fahrzeug-Verzögerungen die der Fahrzeug-Vorderachse zugeordnete elektromotorische Hilfspumpe aktiviert wird, und dass erst zur Erzielung einer maximalen Fahrzeug-Verzögerung ein zusätzlicher Bremsdruckaufbau mittels der Rückförderpumpe erfolgt.

Bezüglich der Bremsanlage als solche (Vorrichtungsanspruch) ist die Lösung dieser Aufgabe dadurch gekennzeichnet, dass die besagte Rückförderpumpe sowie die Hilfspumpe nur den Radbremszylindern der Vorderachse zugeordnet sind und dass die Hilfspumpe derart ausgelegt und der die Hilfspumpe antreibende Elektromotor derart regelbar ist, dass mit der Hilfspumpe für fahrerunabhängige Bremseingriffe durch ein Fahrerassistenzsystem an die Radbremszylinder ein kontinuierlicher steigender Bremsfluiddruck bis hin zu einem Maximalwert in der Größenordnung von 25 bar bis 45 bar angelegt werden kann, während der Fahrzeug-Hinterachse ein elektrohydraulisches Bremssystem zugeordnet ist, das aus einer geeigneten, aus einem Bremsfluid-Reservoir gespeisten Pumpe und den Radbremszylindern zugeordneten Einlassventilen und Auslassventilen besteht.

Erfindungsgemäß sind für einen fahrerunabhängigen Bremsdruckaufbau durch ein Fahrerassistenzsystem zwei Systeme bzw. Komponenten vorgesehen, von denen jede(s) individuell auf einen bestimmten Einsatzbereich bzw. eine bestimmte Ansteuerung durch ein Fahrerassistenzsystem hin ausgelegt sein kann bzw. ausgelegt ist. So können mit einem relativ einfachen und nur der Fahrzeug-Hinterachse zugeordneten elektrohydraulischen Bremssystem, das eine geeignet ansteuerbare und dabei relativ einfache Bremsfluidpumpe sowie geeignete den Hinterachs-Radbremszylindern zugeordnete Ventile aufweist, autonome, d.h. fahrerunabhängige Bremsungen bis hin zu einer Verzögerung in der Größenordnung von 1 m/s² ausreichend schnell und komfortabel sowie zuverlässig ausgeführt werden. Ein derartiges einfaches EHB-System nur für die Fzg.-Hinterachse ist hinsichtlich des Aufwands durchaus vertretbar, insbesondere da hiermit erfindungsgemäß nun eine weitere spezielle Funktion, nämlich eine fahrerunabhängige Abbremsung durchgeführt werden kann.

Größere Verzögerungen hingegen werden durch zusätzliche Aktivierung der Vorderachs-Bremsen umgesetzt, wobei aber auch hier auf eine hohe Dynamik und hohe Qualität Wert gelegt wird, weshalb zunächst nicht auf die besagte Rückförderpumpe zur Bereitstellung von Bremsdruck zurückgegriffen wird. Vielmehr wird eine weitere, hierfür bevorzugt speziell konzipierte Hilfspumpe aktiviert. Diese ist in einer ansonsten im Aufbau üblichen Fahrzeugbremsanlage mit Blockierschutzeinrichtung sowie Fahrdynamikregelung, also in einer sog. ESP-Bremsanlage (oder auch DSC-Bremsanlage), die jedoch lediglich der Fahrzeug-Vorderachse zugeordnet ist, vorgesehen. Diese Hilfspumpe soll bevorzugt in der Lage sein, ein Druckniveau in der Größenordnung von 25 bar bis 45 bar aufbauen zu können, um den vorliegenden Dynamikanforderungen gerecht zu werden, und somit auch ohne Zuschaltung der genannten Rückförderpumpe eine dynamische Abbremsung des Fahrzeugs bis hin zum Stillstand bewerkstelligen zu können. Bevorzugt ist der diese Pumpe antreibende Elektromotor ausreichend regelbar, um ausgehend vom im wesentlichen drucklosen Zustand einen kontinuierlichen Bremsdruckaufbau umsetzen zu können, so dass eine ausreichend komfortable selbsttätige Abbremsung des Fahrzeugs durchgeführt werden kann. Indem diese Hilfspumpe lediglich die Radbremszylinder an der Fahrzeug-Vorderachse und somit nur einen der Bremskreise versorgt, ist ein besonders einfacher Aufbau dieser Pumpe bspw. in Form einer Zahnradpumpe, möglich.

Bei relativ niedrigen Verzögerungsanforderungen durch das Fahrerassistenzsystem wird somit das Fahrzeug alleine durch ein relativ einfach aufgebautes elektrohydraulisches Hinterachs-Bremssystem abgebremst, wobei diese Abbremsung äußerst komfortabel und gleichzeitig bei geeigneter Auslegung des Systems mit ausreichender Dynamik erfolgen kann. Vorteilhafterweise sind die Sicherheitsanforderungen, die an ein solches elektrohydraulisches Hinterachs-Bremssystem gestellt werden, relativ gering, da eine weitere zuverlässige und insbesondere vom elektrischen Fzg.-Bordnetz unabhängige Bremsanlage für die Fzg.-Vorderachse vorgesehen ist. Letztere kann vorteilhafterweise auch bei vollständigem Ausfall der Fahrzeugelektrik mit der vollständigen Bremskraftverstärkung - erzeugt im Unterdruckbremskraftverstärker, der vom Fzg.-Antriebsaggregat versorgt wird - arbeiten. Vorteilhafterweise erhält der Fahrer des Fahrzeugs dann, wenn er parallel zu einem durch das Fahrerassistenzsystem verursachten autonomen Bremseneingriff an der Fzg.-Hinterachse sein Bremspedal betätigt und somit den der Vorderachs-Bremsanlage zugeordneten Hauptbremszylinder aktiviert, eine vollkommen übliche und somit gewohnte Pedalkraft-Rückmeldung.

Sobald ein intensiverer autonomer Bremseneingriff durch das Fahrerassistenzsystem erforderlich ist, wird zusätzlich die genannte und dem Bremssystem der Fzg.-Vorderachse zugeordnete Hilfspumpe angesteuert, wobei in mehr als 99 % aller Fälle der von dieser aufgebaute Bremsfluiddruck für die geforderte Verzögerungslei stung ausreicht. Lediglich bei extremem Bedarf kann zusätzlich in bekannter Weise die bekannte (und ebenfalls nur der Vorderachse zugeordnete) Rückförderpumpe angesteuert werden, wobei vorteilhafterweise die jeweiligen Radbremszylinder bereits durch die Hilfspumpe mit Bremsfluid befüllt sind, so dass auch mit der relativ geringen Förderleistung dieser Rückförderpumpe ein ausreichend steiler Druckgradient erzeugt werden kann. Im übrigen sind entsprechend dem erfindungsgemäßen Verfahren dann zusätzlich die Radbremszylinder der Fzg.-Hinterachse mit Druck beaufschlagt, wodurch der mögliche Kraftschluss zwischen Reifen und Fahrbahn auch bei sehr hohen Reibwerten optimal genutzt werden kann.

Vorteilhafterweise ist die Geräuschentwicklung einer erfindungsgemäß ausgelegten Hilfspumpe im Betriebsfall wesentlich niedriger als diejenige der bekannten Rückförderpumpe(n), so dass in den meisten Fällen auch hierdurch eine Komfortsteigerung erreicht werden kann. In den sehr wenigen Betriebsfällen, in denen wie im vorhergehenden Absatz geschildert zusätzlich die Rückförderpumpe betrieben werden muss, so bspw. bei automatischen Bremsungen zur Unfallvermeidung, spielen die Geräuschentwicklung sowie der dann schlechtere Regelkomfort keine Rolle mehr.

Ziel der vorgeschlagenen Maßnahmen ist es also, autonome Bremseneingriffe zu ermöglichen, die die Vorteile des weiter oben geschilderten ESP-Konzepts ausschöpfen, aber in der Leistung und der Qualität einem Booster-Konzept mit regelbarem Unterdruckverstärker oder einem Brake-By-Wire-System (bspw. in den Form des o.g. EHB-Systems) entsprechen. Dieses Ziel wird dadurch erreicht, dass die beiden Basissysteme ESP (bzw. DSC) und Unterdruck-Bremskraftverstärkung für die Fahrzeug-Vorderachse unverändert beibehalten werden, und durch geeignete Zusatzkomponenten ergänzt werden. Dies gewährleistet die von der Großserienverwendung her bekannten vorteilhaften Eigenschaften, nämlich Robustheit, Zuverlässigkeit und Wirtschaftlichkeit. Ein positiver Effekt ist weiterhin darin zu sehen, dass die erfindungsgemäß benötigten Zusatzkomponenten nur in solchen Fahrzeugen verbaut werden müssen, welche mit der entsprechenden Zusatzfunktion ausgerüstet werden sollen. Eine erste derartige Zusatzkomponente ist das elektrohydraulische Bremssystem nur für die Fahrzeug-Hinterachse, welches aber im Gegensatz zu einer vollständigen elektrohydraulischen Fzg.-Bremsanlage sehr einfach ausgeführt werden kann, insbesondere da auch der benötigte maximale Bremsdruck relativ gering gewählt werden kann. Eine zweite derartige Zusatzkomponente ist die genannte Hilfspumpe, bevorzugt mit den spezifizierten Eigenschaften.

Eine weitere sog. Zusatzkomponente, die eine vorteilhafte Weiterbildung der Erfindung darstellt, kann in Form eines der Hilfspumpe zugeordneten Volumenspeichers vorgesehen sein, der an eine sog. Kompensationsleitung angeschlossen ist, die von der vom Hauptbremszylinder zur Hilfspumpe führenden Bremsfluidleitung abzweigt und ein Schaltventil aufweist, welches geöffnet wird, wenn der Fahrer selbst den Hauptbremszylinder aktiviert und dabei an den Radbremszylindern bereits durch die Hilfspumpe ein Bremsfl u-iddruck angelegt ist, und wobei das Schaltventil im wesentlichen solange geöffnet bleibt, als der stromauf der geschlossenen Einlassventile anliegende Bremsfluiddruck im wesentlichen gleich dem an den Radbremszylindern bereits anliegenden Bremsfluiddruck ist. Hiermit kann nämlich vermieden werden, dass der Fahrer des Fahrzeugs irritiert wird, wenn ein autonomer Bremseneingriff erfolgt und er gleichzeitig selbst die Bremse betätigt, d.h. durch einen Druck auf sein Bremspedal den Hauptbremszylinder aktiviert. Aufgrund des autonomen Bremseneingriffs sind nämlich die einzelnen Radbremsen bereits mit Bremsfluid befüllt, so dass der am Hauptbremszylinder auszuführende Weg und daher auch der entsprechende Bremspedalweg wesentlich kürzer ist als ohne eine derartige "Vor-Befüllung". Der Fahrer kann somit im Falle eines gleichzeitigen fahrerunabhängigen Bremseneingriffs ein deutlich verändertes Pedalgefühl empfinden.

Dieser beschriebene Effekt eines veränderten Pedalgefühls bei einer Fahrerbremsung während eines laufenden autonomen Bremseneingriffs kann durch einen ansteuerbaren Volumenspeicher ausgeglichen werden. Wenn das Bremspedal bei vorbefüllter Radbremsanlage bzw. bereits aktivierten Radbremszylindern betätigt wird, so öffnet das dem Volumenspeicher vorgeschaltete Schaltventil und lässt solange Bremsfluid, das unter dem vom Hauptbremszylinder aufgebrachten Druck steht, in den Volumenspeicher einströmen, bis der Bremsfluid-Druck stromauf sowie stromab der Einlassventile der (Vorderachs-)Radbremszylinder im wesentlich gleich ist. Dann wird das besagte Schaltventil geschlossen und erst daraufhin werden die Einlassventile der Radbremszylinder geöffnet. Ab diesem Moment kann der Fahrer dann über den Hauptbremszylinder den Bremsdruck an den Radbremszylindem erhöhen. Um dabei bis zum Öffnungszeitpunkt der Einlassventile der Radbremszylinder ein dem üblichen Pedalgefühl identisches Gefühl zu erzeugen, kann die Druck-Volumen-Kennlinie der Radbremsanlage in dem genannten Volumenspeicher nachgebildet sein, jedoch ist dies nicht unbedingt erforderlich, da sich auch mit einem herkömmlichen, einfachen Niederdruckspeicher eine deutliche Verbesserung des Pedalgefühls erzielen lässt.

Das beigefügte hydraulische Schaltbild zeigt ein bevorzugtes Ausführungsbeispiele der vorliegenden Erfindung, wobei mit der Bezugsziffer 1 ein übliches Hydroaggregat einer Fahrzeugbremsanlage mit ESP-Funktion gekennzeichnet ist. Dieses Hydroaggregat 1 ist dabei den beiden Radbremszylindern VL und VR der Fahrzeug-Vorderachse VA zugeordnet und bildet einen ersten Bremskreis. Dabei kennzeichnet der Buchstabe L die linke Fahrzeugseite und der Buchstabe R die rechte Fahrzeugseite.

Ein zweiter Bremskreis ist für die beiden Radbremszylinder HL und HR der Hinterachse HA vorgesehen. Dieser ist in Form eines elektrohydraulischen Bremssystems ausgebildet und weist demzufolge eine Bremsfluidpumpe 11 auf, die aus einem Bremsfluid-Reservoir 2d gespeist wird und bei Betrieb über ein in Pumpen-Förderrichtung öffnendes Rückschlagventil das Bremsfluid zu den Radbremszylindern HL, HR zugeordneten Einlassventilen EVHL bzw. EVHR fördert. Über diese stromlos offenen Einlassventile EVHL und EVHR gelangt das Bremsfluid dann in Radbremszylinder HL bzw. HR, während deren Entlastung, d.h. ein Lösen der Hinterachs-Bremsen, über stromlos geschlossene Auslassventile AVHL, AVHR erfolgt. Gesteuert werden diese Ventile sowie der Betrieb der elektromotorisch angetriebenen Bremsfluidpumpe 11 in geeigneter Weise von einem figürlich nicht dargestellten elektronischen Steuergerät, das unter anderem auch die Signale eines Drucksensors 12 verarbeitet.

Auf den ersten Bremskreis der Vorderachse VA zurückkommend sind auch hier den Radbremszylindern VL, VR zugeordnete Einlassventile EV vorhanden, über welche Bremsfluid gesteuert in die Radbremszylinder gelangen kann. Ebenfalls in bekannter Weise vorhanden sind Auslassventile AVVL und AVVR, über die Bremsfluid gesteuert aus den einzelnen Radbremszylindern VL, VR abgeführt werden kann. In dem in seinem Aufbau üblichen Hydroaggregat 1 ist neben einem Trennventil TV sowie einem Schaltventil SV insbesondere eine Rückförderpumpe sRFP vorgesehen sowie weitere bekannte Elemente wie Rückschlagventile, Drosseln und Speicher. All diese genannten und in der Anordnung vollkommen üblichen Elemente bilden eine Blockierschutzeinrichtung mit einer Bremsdruckmodulationsventilanordnung und können in Zusammenwirken mit einem figürlich nicht dargestellten geeigneten elektronischen Steuergerät eine automatische Bremseinrichtung bilden, die unter Zuhilfenahme der Rückförderpumpe sRFP die Fahrzeugbewegung fahrerunabhängig und radindividuell abbremsen und/oder stabilisieren kann.

Mit der Bezugziffer 2 ist die ebenfalls übliche Bremsen-Betätigungseinheit für den Fahrer des Fahrzeugs in ihrer Gesamtheit bezeichnet, bestehend aus einem Bremspedal 2a, mit dem unter Zwischenschaltung eines Bremskraftverstärkers 2b ein einkreisiger Hauptbremszylinder 2c betätigt wird, der aus einem Bremsfluid-Reservoir 2d gespeist wird. In einer Verbindungsleitung vom Hauptbremszylinder 2c zum ersten Bremskreis der Vorderachse VA ist ferner ein Drucksensor 3 vorgesehen. Ferner ist ein weiterer Drucksensor 4 in der zum Radbremszylinder VR führenden Bremsfluid-Leitung vorgesehen.

Dem Hydroaggregat 1 und somit dem Bremskreis der Vorderachse VA ist weiterhin eine Hilfspumpe 5 zugeordnet, die von einem nicht dargestellten Elektromotor angetrieben werden kann und stromab derer ein gegen die Pumpen-Förderrichtung sperrendes Rückschlagventil 6 vorgesehen ist. Gespeist wird diese Hilfspumpe 5 aus dem dem Hydroaggregat 1 zugeordneten Hauptbremszylinder 2c bzw. direkt aus dem Reservoir 2d. Somit kann die Hilfspumpe 5 bei Betrieb einen Bremsfluidstrom unter Druck zu den Einlassventilen EVVL und EVVR der Radbremszylinder VL und VR fördern.

Bereits erwähnt wurde ein figürlich nicht dargestelltes elektronisches Steuergerät, welches die stromlos offenen Einlassventile EV, die stromlos geschlossenen Auslassventile AV sowie die Rückförderpumpe sRFP im Bedarfsfall, d.h. zur Erzielung einer Blockierschutzfunktion sowie zur Fahrzeugstabilisierung in bekannter Weise geeignet ansteuert. Dieses oder ein anderes elektronisches Steuergerät kann nun auch den bereits genannten, die Hilfspumpe 5 antreibenden Elektromotor in geeigneter Weise ansteuern, wenn eine Abbremsung des Fahrzeugs seitens eines Fahrerassistenzsystems erforderlich ist. Dies sowie die Kriterien, welche die Hilfspumpe 5 sowie der zugehörige Elektromotor erfüllen sollen, wurde vor der Figurenbeschreibung bereits ausführlich erläutert. Erläutert wurde auch bereits, dass diese Hilfspumpe 5 nur bei höheren Verzögerungsanforderungen des Fahrerassistenzsystems angesteuert wird, wohingegen bei geringen Verzögerungsanforderungen (etwa bis zur Größenordnung von 1 m/s²) alleinig das Hinterachs-Bremssystem aktiviert wird, und zwar durch entsprechende Ansteuerung der Bremsfluidpumpe 11.

Zurückkommend auf das Vorderachs-Bremssystem und die darin vorgesehene Hilfspumpe 5 ist hier weiterhin ein Volumenspeicher 7 vorgesehen, dem ein Schaltventil 8 vorgelagert ist, und der über eine sog. Kompensationsleitung 9 mit der vom Hauptbremszylinder 2c zur Hilfspumpe 5 führenden Bremsfluidleitung verbunden ist. Auch die Funktion dieses Volumenspeichers 7 mit dem Schaltventil 8 wurde vor der Figurenbeschreibung bereits ausführlich erläutert, wobei für die dort erläuterte Abfrage, ob der Bremsfluid-Druck stromauf sowie stromab der Einlassventile EV der Radbremszylinder VL, VR im wesentlich gleich ist, auf die beiden Drucksensoren 3 und 4 zugegriffen werden kann. Im übrigen sei noch darauf hingewiesen, dass durchaus eine Vielzahl von Details abweichend vom gezeigten Ausführungsbeispiel gestaltet sein kann, ohne den Inhalt der Patentansprüche zu verlassen.

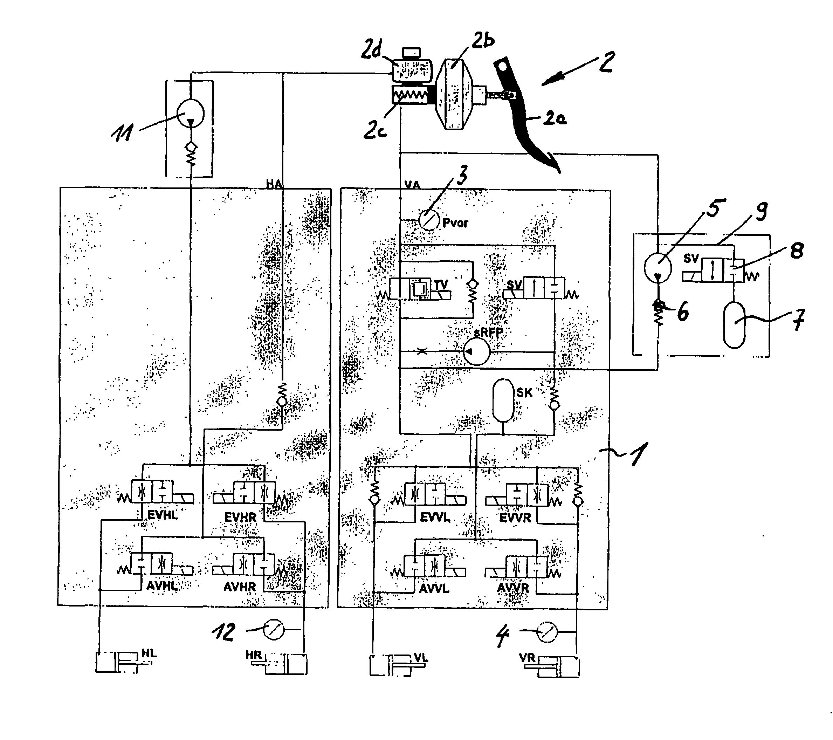

## Patentansprüche

1. Verfahren zum Abbremsen eines Kraftfahrzeugs mittels eines Fahrerassistenzsystems, wobei das Fahrzeug mit einer hydraulischen Zweikreis-Bremsanlage ausgestattet ist, die einen einkreisigen der Fahrzeug-Vorderachse (VA) zugeordneten Hauptbremszylinder (2c) mit Bremsfluid-Reservoir (2d) aufweist und mit einer Blockierschutzeinrichtung, die eine Bremsdruckmodulationsventilanordnung und eine der Fahrzeug-Vorderachse zugeordnete Rückförderpumpe (sRFP) besitzt, versehen ist, und die eine automatische Bremseinrichtung enthält, die im Zusammenwirken mit der Blockierschutzeinrichtung und deren Rückförderpumpe (sRFP) die Fahrzeugbewegung fahrerunabhängig und radindividuell abbremsen und/oder stabilisieren kann, und die weiterhin mit einer elektromotorisch angetriebenen Hilfspumpe (5) zum Fördern von Bremsfluid zu Einlassventilen (EV) der Radbremszylinder (VL, VR) der Vorderachse ausgerüstet ist,
**dadurch gekennzeichnet, dass** für fahrerunabhängige Bremseingriffe durch ein Fahrerassistenzsystem zunächst ein der Fahrzeug-Hinterachse zugeordnetes elektrohydraulisches Bremssystem, das aus einer geeigneten, aus einem Bremsfluid-Reservoir (2d) gespeisten Pumpe (11) und den Radbremszylindern (HL, HR) zugeordneten Einlassventilen (EVHL, EVHR) und Auslassventilen (AVHL, AVHR) besteht, aktiviert wird, und dass für stärkere Fahrzeug-Verzögerungen die der Fahrzeug-Vorderachse (VA) zugeordnete elektromotorische Hilfspumpe (5) aktiviert wird, und dass erst zur Erzielung einer maximalen Fahrzeug-Verzögerung ein zusätzlicher Bremsdruckaufbau mittels der Rückförderpumpe erfolgt.

2. Hydraulische Zweikreis-Fahrzeugbremsanlage, insbesondere zur Durchführung des Verfahrens nach Anspruch 1, mit einem einkreisigen der Fahrzeug-Vorderachse (VA) zugeordneten Hauptbremszylinder (2c) mit Bremsfluid-Reservoir (2d), mit einer Blockierschutzeinrichtung, die eine Bremsdruckmodulationsventilanordnung und eine der Fahrzeug-Vorderachse zugeordnete Rückförderpumpe (sRFP) besitzt, und mit einer automatischen Bremseinrichtung, die im Zusammenwirken mit der Blockierschutzeinrichtung und deren Rückförderpumpe (sRFP) die Fahrzeugbewegung fahrerunabhängig und radindividuell abbremsen und/oder stabilisieren kann, mit einer elektromotorisch angetriebenen Hilfspumpe (5) zum Fördern von Bremsfluid zu Einlassventilen (EV) der Radbremszylinder (VL, VR) der Vorderachse und mit einem elektronischen Steuergerät, **dadurch gekennzeichnet, dass** die Hilfspumpe (5) derart ausgelegt und der die Hilfs-pumpe (5) antreibende Elektromotor durch das Steuergerät derart regelbar ist, dass mit der Hilfspumpe für fahrerunabhängige Bremseingriffe durch ein Fahrerassistenzsystem an die Radbremszylinder (VL, VR) ein kontinuierlicher steigender Bremsfluiddruck bis hin zu einem Maximalwert in der Größenordnung von 25 bar bis 45 bar angelegt werden kann, sowie mit einem der Fahrzeug-Hinterachse zugeordneten elektrohydraulischen Bremssystem, bestehend aus einer geeigneten, aus einem Bremsfluid-Reservoir (2d) gespeisten Pumpe (11) und den Radbremszylindern (HL, HR) zugeordneten Einlassventilen (EVHL, EVHR) und Auslassventilen (AVHL, AVHR).

3. Fahrzeugbremsanlage nach Anspruch 2,
**dadurch gekennzeichnet, dass** von der vom Hauptbremszylinder (2c) zur Hilfspumpe (5) führenden Bremsfluidleitung eine über ein Schaltventil (8) zu einem Volumenspeicher (7) führende Kompensationsleitung (9) abzweigt.

4. Verfahren zum Abbremsen eines Kraftfahrzeugs mittels eines Fahrerassistenzsystems, wobei das Fahrzeug mit einer hydraulischen Zweikreis-Bremsanlage nach Anspruch 3 ausgestattet ist,
**dadurch gekennzeichnet, dass** das Schaltventil (8) geöffnet wird, wenn an den Vorderachs-Radbremszylindern (VL, VR) bereits durch die Hilfspumpe (5) ein Bremsfluiddruck angelegt ist und der Fahrer den Hauptbremszylinder (2c) aktiviert, und dass das Schaltventil (8) im wesentlichen solange geöffnet bleibt, als der stromauf der geschlossenen Einlassventile (EV) anliegende Bremsfluiddruck im wesentlichen gleich dem an den Radbremszylindern (VL, VR) bereits anliegenden Bremsfluiddruck ist.

## Claims

1. A method of braking a motor vehicle by means of a driver assistance system, wherein the vehicle is equipped with a hydraulic two-circuit brake system comprising a single-circuit main brake cylinder (2c) and brake fluid reservoir (2d) associated with the front axle (VA) of the vehicle and an antilock device with a brake pressure-modulating valve arrangement and a return pump (sRFP) associated with the front axle and containing an automatic brake device which in co-operation with the antilock device and the return pump (sRFP) can brake and/or stabilise the motion of the vehicle for individual wheels and independently of the driver, also equipped with an electrically driven auxiliary pump (5) for conveying brake fluid to inlet valves of the wheel brake cylinders (VL, VR) on the front axle,
**characterised in that** for the purpose of driver-independent braking by a driver assistance system, an electrohydraulic brake system associated with the rear axle of the vehicle and comprising a suitable pump (11) supplied from a brake fluid reservoir (2d) and inlet valves (EVHL, EVHR) and outlet valves (AVHL, AVHR) associated with the wheel brake cylinders (HL, HR) is first activated whereas for stronger deceleration of the vehicle the electric auxiliary pump (5) associated with the front axle (VA) is activated, after which additional braking pressure is built up by the return pump in order to obtain maximum deceleration of the vehicle.

2. A hydraulic two-circuit vehicle braking system, especially for working the method according to claim 1, comprising a single-circuit main brake cylinder (2c) and brake fluid reservoir (2d) associated with the front axle (VA), an antilock device with a brake pressure-modulating valve arrangement and a return pump (sRFP) associated with the front axle, and an automatic brake device which in co-operation with the antilock device and the associated return pump (sRFP) can brake and/or stabilise the motion of the vehicle for individual wheels independently of the driver, also comprising an electric auxiliary pump (5) for conveying brake fluid to inlet valves (EV) of the wheel brake cylinders (VL, VR) on the front axle and comprising an electronic control unit, **characterised in that** the auxiliary pump (5) is so designed and the electric motor driving the auxiliary pump (5) is so adjustable by the control unit that for the purpose of driver-independent braking by a driver assistance system the auxiliary pump can apply a continuously increasing brake fluid pressure up to a maximum value of the order of 25 to 45 bar to the wheel brake cylinders (VL, VR), the device also comprising an electrohydraulic brake system associated with the rear axle and comprising a suitable pump (11) supplied from a brake fluid reservoir (2d) and inlet valves (EVHL, EVHR) and outlet valves (AVHL, AVHR) associated with the wheel brake cylinders (HL, HR).

3. A vehicle brake system according to claim 2, **characterised in that** a compensation line (9) leading via an on-off valve (8) to a volume reservoir (7) branches off from the brake fluid line leading from the main brake cylinder (2c) to the auxiliary pump (5).

4. A method of braking a motor vehicle by a driver assistance system, wherein the vehicle is equipped with a hydraulic two-circuit brake system according to claim 3,
**characterised in that** the on-off valve (8) is opened when a brake fluid pressure is already being applied to the front axle wheel brake cylinders (VL, VR) by the auxiliary pump (5) and the driver is activating the main brake cylinder (2c), and the on-off valve (8) remains open substantially until the brake fluid pressure upstream of the closed inlet valves (EV) is substantially equal to the brake fluid pressure already applied to the wheel brake cylinders (VL, VR).

## Revendications

1. Procédé de freinage d'un véhicule automobile à l'aide d'un système d'assistance de conduite,
le véhicule étant équipé d'une installation de freinage hydraulique à deux circuits comportant un maître-cylindre de frein (2c) avec un réservoir de liquide de frein (2d) dont un circuit est associé à l'essieu avant (VA) du véhicule et d'une installation antiblocage comportant un dispositif de soupapes de modulation de la pression de frein et une pompe de refoulement (sRFP), associée à l'essieu avant du véhicule et une installation de freinage automatique,
cette dernière, coopérant avec l'installation antiblocage et sa pompe de refoulement (sRFP) freinant le mouvement du véhicule de manière individuelle par roue et indépendamment du conducteur et/ou stabilisant le mouvement et
comportant en outre une pompe électrique auxiliaire (5) pour débiter du liquide de frein vers les soupapes d'entrée (EV) des cylindres de frein de roue (VL, VR) de l'essieu avant,
**caractérisé en ce que**
pour une action de freinage indépendante du conducteur, un système d'assistance de conduite active tout d'abord un système de freinage électrohydraulique associé à l'essieu arrière du véhicule et composé d'une pompe (11), alimentée à partir d'un réservoir de liquide de frein (2d) et de soupapes d'entrée (EVHL, EVHR) et de soupapes de sortie (AVHL, AVHR) associées au cylindre de frein de roue (HL, HR) et
pour une décélération plus importante du véhicule, on active la pompe électrique auxiliaire (5) associée à l'essieu avant (VA) du véhicule et
ce n'est que pour une décélération maximale du véhicule que la pompe de refoulement augmente de façon complémentaire la pression de frein.

2. Installation hydraulique de freins de véhicule à deux circuits notamment pour la mise en oeuvre du procédé de la revendication 1 comportant un maître-cylindre de frein (2c) relié à un circuit associé à l'essieu avant (VA) du véhicule et un réservoir de liquide de frein (2d), une installation antiblocage munie d'un dispositif de soupapes de modulation de la pression de frein et une pompe de refoulement (sRFP) associée à l'essieu avant du véhicule et une installation de freinage automatique pour coopérer avec l'installation antiblocage et sa pompe de refoulement (sRFP) pour freiner et/ou stabiliser le mouvement du véhicule, individuellement par roue et indépendamment du conducteur, une pompe électrique auxiliaire (5) pour débiter du liquide de frein vers les soupapes d'entrée (EV) des cylindres de frein de roue (VL, VR) de l'essieu avant ainsi qu'un appareil de commande électronique
**caractérisée en ce que**
la pompe auxiliaire (5) est conçue, son moteur électrique étant commandé par l'appareil de commande et réglé de façon que pour des actions de freinage indépendantes du conducteur, elle applique par le système d'assistance de conduite aux cylindres de frein de roue (VL, VR), une pression de liquide de frein augmentant en continu jusqu'à une valeur maximale de l'ordre de 25 bars à 45 bars et
un système de freinage électrohydraulique associé à l'essieu arrière du véhicule, ce système se composant d'une pompe (11) alimentée à partir d'un réservoir de liquide de frein (2d), de soupapes d'entrée (EVHL, EVHR) et de soupapes de sortie (AVHL, AVHR) associées aux cylindres de frein de roue (HL, HR).

3. Installation de freinage de véhicule selon la revendication 2,
**caractérisée en ce qu'**
une conduite de compensation (9) reliée à une capacité (7) par l'intermédiaire d'une soupape de commutation (8) dérive de la conduite de liquide de frein reliant le maître-cylindre de frein (2c) à la pompe auxiliaire (5).

4. Procédé de freinage d'un véhicule à l'aide d'un système d'assistance de conduite,
le véhicule étant équipé d'une installation de freinage hydraulique à deux circuits selon la revendication 3,
**caractérisé en ce qu'**
on ouvre la soupape de commutation (8) lorsque la pompe auxiliaire (5) a déjà appliqué du liquide de freinage sous pression aux cylindres de frein de roue (VL, VR) de l'essieu avant et le conducteur active le maître-cylindre de frein (2c) et
la soupape de commutation (8) reste en principe ouverte jusqu'à ce que la pression de liquide de frein appliquée en amont aux soupapes d'entrée (EV), fermées, soit pour l'essentiel égale à la pression de liquide de frein déjà appliquée aux cylindres de frein de roue (VL, VR).
